# EUROPEAN PATENT APPLICATION

(11) **EP 0 929 196 A1**
(43) Date of publication of application: **14.07.1999**
(21) Application number: 99830002.4
(22) Date of filing: 05.01.1999
(51) Int. Cl.: H04N 5/44, G08B 21/00

(54) **Device for detecting the viewing distance of a TV screen**

(30) Priority: 09.01.1998 IT MI980020
(71) Applicant: Fagnani, Paolo, Cassano d'Adda (Milano) (IT)
(72) Inventor: Fagnani, Paolo, Cassano d'Adda (Milano) (IT)
(74) Representative: Concone, Emanuele

(57) **Abstract**

A device for controlling the viewing distance of a TV set provided with a SCART socket (ST) includes a sensor (SD) which detects whether the viewing distance is shorter than a reference value and in the affirmative activates a double electromagnetic relay so as to transmit to the pin 8 of said SCART socket (ST) a +9V voltage and to interrupt the video signal of pin 19. The device is preferably manufactured as a battery-powered external unit provided with an outlet SCART socket (S1) and an inlet SCART socket (S2) connected to the outlet SCART socket (S1).

## Description

The present invention relates to the field of TV screens and the like, and in particular to a device suitable to control the distance at which the TV is watched. Specific reference will be made hereafter to a TV set, but it is clear that what is being said is applicable to any similar apparatus provided with a SCART socket, such as a computer or surveillance monitor, etc.

It is known that the safe viewing of a TV screen requires a minimum distance which is proportional to the size of the screen. Viewing at an excessively short distance can cause sight problems and other types of problems, caused by the strong brightness of the screen and by the radiations emitted by the cathode tube Unfortunately, these effects occur only after a certain period of exposure at short distance, therefore it is advisable to detect immediately if the viewing distance is correct. Moreover, children tend to stay too close to the screen regardless of the indications of the adults, and the same may happen to short-sighted people experiencing problems of sharp viewing at the correct distance.

With reference to said problem, various devices have already been devised to indicate and/or prevent the close viewing. All known devices have in common a sensor, usually of the infrared or ultrasonic type, which detects whether the distance of the viewer is shorter than a properly set reference value. Some devices merely emit acoustical and/or optical signals upon detection of a distance shorter than the minimum set distance, whereas other devices act on the TV set in order to prevent the viewer from continuing the viewing at an harmful distance.

The simplest type of intervention is the interruption of the power supply which results in the turning off of the screen. Examples of such devices are disclosed in the Japanese patent applications JP-08317304 and JP-06133256 as well as in the US patents US-5541664 and US-4716469. These devices can be either built into the TV set or external and connected thereto through cables. It is clear that this type of drastic intervention can turn out to be quite harmful for the TV set in time, since it undergoes repeated turning on and off well beyond the normal use and with a potentially high frequency. Moreover, the restoration of the image on the screen is not immediate after the user has reached the correct distance.

Another type of intervention which is more sophisticated and less harmful for the apparatus is the change in size of the image on the screen according to the viewing distance, as disclosed in the Japanese applications JP-06133257 and JP-08032900. As an alternative, it is possible to act on other parameters such as volume, brightness, etc. as disclosed in the Japanese applications JP-03187687 and JP-04132487. All these cases require a precise and sophisticated control of the TV set operation, which implies a device built into the TV set and therefore not applicable at a later time into a TV set already available to the user. Moreover, also this type of interventions does not allow an immediate restoration of the normal viewing conditions.

What has been said above also applies to the device disclosed in the Korean patent KR-9000328 which acts by switching the receiving frequency of the TV to a channel without any signal. In this case, the only drawback which is possibly avoided is the delay in the restoration of the image.

Therefore the object of the present invention is to provide a device suitable to overcome the above-mentioned drawbacks.

This object is achieved by means of a device which switches the TV set to the signal coming from the SCART socket and at the same time can also interrupt said signal.

A first fundamental advantage of the present device is that it acts instantaneously and without any risk of damage to the TV set even in the case of frequent intervention. Furthermore, also the restoration of the image is immediate.

A second significant advantage of this device comes from the fact that it can be easily manufactured as a device separate from the TV set but very easily connectable thereto. As a consequence, the device can be applied to any existing TV set as long as the latter is provided with a SCART socket.

These and other advantages and characteristics of the device according to the present invention will be clear to those skilled in the art from the following detailed description of an embodiment thereof, with reference to the annexed drawings wherein:
Fig. 1 is a diagrammatic view of the installation arrangement of the device in the version separate from the TV set;
Figs.2 and 3 are diagrammatic rear and front views, respectively, of the device of fig. 1;
Fig.4 is a basic scheme of the intervention method of the present device; and
Fig.5 is a circuit diagram of the basic components of the device.

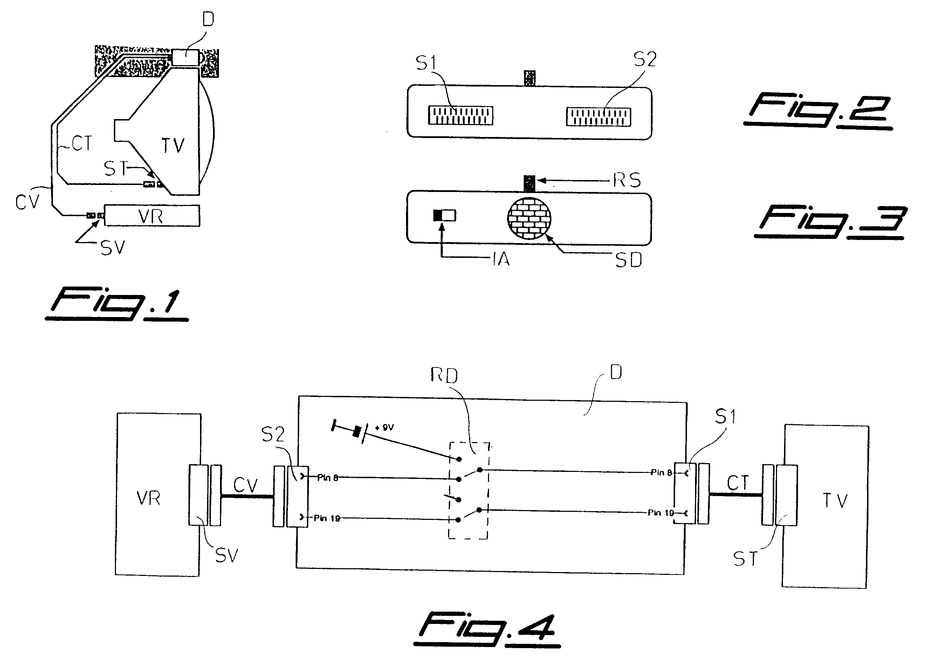

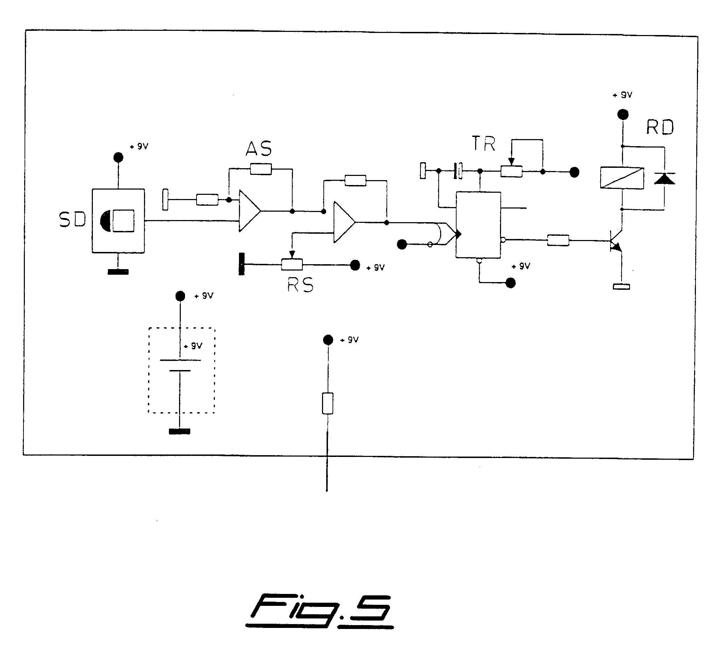

With reference to figs.1 to 3, there is seen that a device according to the invention referred to as D is manufactured as an external unit which can be connected to the TV set through a cable CT. In order to achieve said connection, the cable CT is provided with two SCART plugs at its ends which fit into an outlet SCART socket S1 of the device and into an inlet SCART socket ST of the TV set

In order to still allow the connection of a videorecorder VR to the TV set through a SCART cable in case the TV set is provided with one SCART socket only, the device D can also be provided with an inlet SCART socket S2. This inlet socket S2 is connected to the outlet socket S1, whereby the signal coming through a second SCART cable CV from the SCART socket SV of the videorecorder VR reaches the TV set through the device D.

The device has on its front side a power switch 1A and a distance sensor SD suitable to detect the distance of the viewer. The adjustment of said sensor can be carried out through a suitable regulator RS of the intervention threshold which allows to adapt the device to the specific operating conditions. In practice, the sensor SD is adjusted so as to activate the device according to the size of the TV set, the position of the device and so on.

Figure 4 diagrammatically illustrates the method of intervention of the device. The outlet socket S1 is a standard SCART socket connected to the inlet socket S2 but for the connections made on the contacts or "pins" conventionally indicated by the numbers 8 and 19. Since the SCART connections are well known to those skilled in the art, here it will only be reminded that pin 19 is the outlet pin of the video signal and pin 8 is used as a function switch between normal mode and auxiliary mode. In other words, when pin 8 is in the low state (applied voltage between 0 and +2V) the TV signal displayed on the screen is the signal coming from the coaxial cable (aerial), whereas when it is in the high state (applied voltage between +9V and +12V) the TV signal displayed on the screen is the signal coining from the SCART socket ST.

When the device D detects that the viewer is too close to the screen, a double electromagnetic relay RD switches pin 8 to a +9V voltage and interrupts the signal on pin 19. In this way, the TV set receives through pin 8 the impulse for switching the transmission to the signal coming from the SCART socket, and at the same time the video signal from pin 19 of said socket ST is interrupted.

It should be noted that in the absence of the videorecorder VR or other similar apparatus (e.g. decoder, satellite receiver) connected to the inlet socket S2, it would be sufficient to switch pin 8 even without the interruption on pin 19. Therefore, in its simplest version, the device could include only the outlet socket S1 and a single relay acting only on pin 8. It is clear that in this case it would not be possible to make the VR-TV connection through a SCART cable unless the TV set is provided with more than one SCART socket.

Figure 5 illustrates a circuit diagram of the device where there is seen that the signal coming from the distance sensor SD is amplified by an amplifier stage AS, prior to being used for the comparison with the reference value set through the regulator RS. It is also preferable to provide an adjustable timer TR which allows to set a delay in the intervention of the device. In this way, the activation of the relay RD does not immediately follow the indication of excessively short distance coming from the sensor SD, but rather takes place only if that indication lasts for the time set by means of the timer TR. This allows to prevent that the mere momentary passage of a person before the sensor SD causes the immediate activation of the device.

Given the very small power consumption of the present device, it can be advantageously supplied by a 9V battery which can also provide the switching voltage to pin 8 and make the installation of the device easier.

It is clear that the above-described and illustrated embodiment of the device according to the invention is just an example susceptible of various modifications. In particular, the sensor SD can be of any suitable type (e.g. infrared, ultrasonic) and can be located in other positions than the illustrated one. Furthermore, as previously mentioned, the device can be built into the TV set and thus only include the sensor SD and the circuit of fig.5 which acts directly on the SCART socket of the TV set.

## Claims

1. A device for controlling the viewing distance of a TV set or the like provided with at least one SCART socket (ST), including a sensor (SD) suitable to detect whether the viewer is at a distance shorter than a reference value set through an intervention threshold regulator (RS) and to activate intervention means if said reference value is not respected, characterized in that said intervention means consist of means suitable to switch the TV signal displayed on the screen to the TV signal coming from the SCART socket (ST).

2. A device according to claim 1, characterized in that the intervention means consist of means suitable to transmit to the pin 8 of the SCART socket (ST) a voltage between +9V and +12V.

3. A device according to claim 1 or 2, characterized in that the intervention means also provide the interruption of the video signal of pin 19 of the SCART socket (ST).

4. A device according to one or more of claims 1 to 3, characterized in that it is manufactured as an external unit including the distance sensor (SD), the intervention threshold regulator (RS) and an outlet SCART socket (S1), the intervention means acting on the signals leaving through said outlet SCART socket (S1).

5. A device according to claim 4, characterized in that it includes an inlet SCART socket (S2) connected to the outlet SCART socket (S1).

6. A device according to one or more of the preceding claims, characterized in that it further includes an adjustable timer (TR) suitable to allow the setting of a minimum persistence time of the intervention signal coming from the distance sensor (SD), the activation of the intervention means being carried out only if said signal still persists at the end of said time.

7. A device according to one or more of the preceding claims, characterized in that the intervention means include a double electromagnetic relay.

8. A device according to one or more of claims 4 to 7, characterized in that the power supply is provided by a 9V battery.
